# EUROPÄISCHE PATENTSCHRIFT

(11) **EP 0 762 038 B1**
(45) Veröffentlichungstag und Bekanntmachung des Hinweises auf die Patenterteilung: **19.12.2001**
(21) Anmeldenummer: 96112845.1
(22) Anmeldetag: 09.08.1996
(51) Int. Cl.: F16L 39/00

(54) **Verbindungseinrichtung zum Verbinden von Rohren**
Pipe connection device
Dispositif de raccordement pour tuyaux

(30) Priorität: 19.08.1995 DE 29513306 U; 01.12.1995 DE 29519060 U; 06.07.1996 DE 29611845 U
(43) Veröffentlichungstag der Anmeldung: 12.03.1997
(73) Patentinhaber: Ruppert, Hans-Peter, D-65187 Wiesbaden (DE)
(72) Erfinder: Wendorff, Ernst, 65232 Taunusstein (DE)
(74) Vertreter: Blumbach, Kramer & Partner GbR

(56) Entgegenhaltungen:
- EP-A- 0 378 406
- EP-A- 0 457 342
- EP-A- 0 510 803
- EP-A- 0 510 804
- EP-A- 0 695 621
- DE-A- 3 718 975
- DE-A- 4 423 372
- DE-C- 227 590
- DE-U- 7 903 096
- US-A- 3 970 335
- US-A- 4 129 282

## Beschreibung

Die Erfindung betrifft einen Verbinder zum Verbinden von Rohren, vorzugsweise von vernetzten Kunststoffrohren.

Zum Verbinden von Rohren sind verschiedene Verbindungseinrichtungen bekannt, die ihrem jeweiligen Einsatzzweck entsprechend ausgebildet sind.

Bei Rohren von beispielsweise 32 oder 50 mm Durchmesser fanden in der Pneumatik beispielsweise metallische Rohrverbinder ihren Einsatz. Diese in der Regel gegossenen Verbinder waren entweder linear-rohrförmig oder T-förmig, um entweder zwei oder drei Rohre miteinander zu verbinden. Derartige metallische Verbinder weisen jedoch wesentliche Nachteile auf. Bereits bei den vorgenannten Rohrdurchmessern kommt es zu einem sehr hohen Gewicht des metallischen Verbinders, welches bei noch größeren Rohrdurchmessern nicht linear, sondern in etwa mit der dritten Potenz des Rohrdurchmessers zunimmt. Darüber hinaus sind Metalle in der Regel instabil gegenüber Säuren und häufig für Lebensmittel nicht zugelassen. Spezielle Legierungen, wie beispielsweise Chrom-Nickel-Stähle, weisen zwar höhere chemische Stabilität auf, sind jedoch schwierig zu verarbeiten und extrem teuer.

Da sich Kunststoff-Verrohrungen zunehmend eine immer breiter werdende Anwendungspalette erschließen, ist auch hier der Einsatz von Metallen eher unerwünscht. Aufgrund eines anderen Temperaturausdehnungsverhaltens kommt es zu Spannungen im Metall-Kunststoff-Übergang und durch die Eigenschaften des Metalls zu einer unerwünschten Verschlechterung der ansonsten hochinteressanten Kunststoffverrohrung.

Im Bereich der Pneumatik, der Hausinstallation, der Abwasser- sowie Frischwassersysteme, der chemischen Industrie fanden bisher für verschiedene Anwendungszwecke jeweils verschiedene Bauteile ihren Einsatz.

Aus der Europäischen Patentanmeldung 0 378 406 ist ein im wesentlichen rohrförmiger Verbinder aus vernetztem Polyethylen bekannt. Dieser Verbinder enthält eine Elektroschweißmuffe aus unvernetztem Polyethylen (PE), welche durch elektrisches Heizen ein Rohr mit dem Verbinder verschweißt. Dieser Verbinder wird werksseitig auf den Durchmesser und die Anzahl der zu verbindenen Rohre angepaßt und ist daher vor Ort unflexibel in der Anwendung. Ferner ist seine Herstellung kompliziert und kostenintensiv.

Die Europäische Patentanmeldung 0 457 342 beschreibt ein Kupplungselement, welches mit einer Monomerlösung an das Ende eines Rohrabschnittes anpolymerisiert ist, um zwei Rohre direkt zu verbinden. Das Kupplungselement ist ebenso unflexibel, instabil und kompliziert in der Anwendung.

Gegenüber diesem Stand der Technik liegt der Erfindung die Aufgabe zugrunde, ein universelles Verbindungselement zu schaffen, das von hoher chemischer Stabilität bzw. säurefest ist, geringes Gewicht hat, einfach zu fertigen und vielseitig einsetzbar ist.

Diese Aufgabe wird auf höchst überraschende Weise bereits mit den Merkmalen des Anspruchs 1 gelöst.

Durch Verwendung eines blockförmigen Grundkörpers, der ganz oder zu einem großen Teil aus einem vernetzten Kunststoff besteht oder zumindest einen vernetzten Kunststoff enthält, kann eine vielseitige Verbindungseinrichtung geschaffen werden.

Bisher ging man davon aus, daß Kunststoffe aufgrund eines gegenüber Metallen schlechteren Temperatur-Zeitstands-Diagramms für hochbelastete Verbindungseinrichtungen nicht geeignet sind. Dieses Vorurteil konnte der Erfinder jedoch durch Verwendung von vernetzten Kunststoffen, z.B. von vernetztem Polyethylen oder vernetztem Polyacetal, vollständig widerlegen.

Durch den Einsatz von Polyethylen mit bevorzugten Vernetzungsgraden von mindestens 60 % konnten Verbindungseinrichtungen geschaffen werden, die dauerhaft hohen Druckbelastungen (ausgeübt von Fluiden, Riesel- und Blasgütern) widerstanden und dennoch im Vergleich zu Metallen extrem leicht waren.

Weitere Kunststoffe, die für eine derartige Verbindungseinrichtung mit ebenso guten Eigenschaften zur Verfügung stehen, umfassen insbesondere Phenolharz oder sind Kunststoffe auf der Basis ungesättigter Polyesterharze.

Wahlweise können diese Kunststoffe zur nochmaligen Verbesserung ihrer mechanischen Eigenschaften, wie Festigkeit und Schlagbeständigkeit mit Zusätzen verstärkt werden, wobei sich hierbei als Verstärkungsstoffe insbesondere Glas- und Kohlenstoffasermaterialien anbieten. Beispielsweise ist als ein faserverstärkter Kunststoff dieser Art aus der Gruppe der "glasfaserverstärkten ungesättigten Polyesterharze (GF-UP)" insbesondere SMC 0300 zu nennen, das im Brandfall weder schmilzt noch tropft und für Anwendungen geeignet ist, die erhöhte Oberflächenqualität sowie geringere Verzugs- und Schwindungsneigung erfordern.

Durch Wahl eines blockförmigen Grundkörpers, der im wesentlichen senkrecht zueinander oder unter einem Winkel zueinander ausgerichtete Außenflächen aufweist, konnte preisgünstiges Blockmaterial eingesetzt werden, welches auf einfache Weise durch Bohren, Sägen, Schneiden, Schleifen oder Fräsen bearbeitbar war. Die mechanische Bearbeitung kann vor oder nach der Vernetzung erfolgen.

Diese Bearbeitungsmöglichkeiten bestehen selbst nach Fertigstellung und Vernetzung des Verbinders weiter. Vor Ort können mittels handgehaltener Werkzeuge Bohrungen mit oder ohne Gewinde in den Verbinder eingebracht werden, um den Anschluß weiterer Zu- oder Abführungen zu ermöglichen.

Bereits mit einem einfachen kubischen Kunststoffblock als Grundkörper ist es möglich, durch Einbringen einer Durchgangsbohrung sowie einer weiteren, seitlich in die Durchgangsbohrung mündenden Bohrung, einen T-Verbinder zu realisieren.

Der Einsatz des erfindungsgemäßen Verbinders ist jedoch keineswegs auf Rohre mit gleichem Durchmesser beschränkt. Es können Übergangsstücke und Verbindungen hergestellt werden, welche als Zwischenstück für verschiedenste Verbindungssysteme dienen. Mit konisch verlaufenden Durchgangsbohrungen oder ineinander mündende Bohrungen mit verschiedenem Durchmesser können Adapterstücke für beliebige verschiedene Durchmesser und sogar für verschiedene Flanschsysteme hergestellt werden.

Vom einfachen Distanzstück bis zum komplizierten Mehrfachverbinder mit nachträglich vor Ort angebrachten zusätzlichen Anschlüssen kann der erfindungsgemäße Blockverbinder aus vernetztem Kunststoff seine Anwendung finden.

Zur Erleichterung der Bearbeitung ist es ebenfalls möglich, zunächst unvernetzte Kunststoffblöcke formgebend zu bearbeiten, wie etwa durch Bohren, Fräsen, Sägen, Schneiden, Schleifen usw., und diese danach beispielsweise durch Bestrahlung zu vernetzen.

Alternativ sind derartige Blockverbinder durch Spritzguß formbar, wobei die nachträgliche Strahlenvernetzung oder eine bereits beim Spritzgießen erfolgende chemische Vernetzung möglich ist.

Zur Aufnahme der Spann- und Zugkräfte der Anpreßschrauben an der Flanschverbindung wird ein Ankerelement in den Kunststoff eingesetzt. Durchgehende Bolzen haben die Funktionen:
a) Verteilung der Zugkräfte der Flanschverbindung,
b) Stabilisierung des Kunststoffverbinders gegen Verzug.

Die Ankerelemente können vorteilhaft als Gewindebolzen, Zugstäbe, Querbolzen oder auch als Stehbolzen ausgebildet sein und weisen vorzugsweise jeweils von außen zugängliche Befestigungsmittel in Form von Innen- oder Außengewinden auf.

Zur exakten Positionierung der Zugstäbe oder Stehbolzen können diese innerhalb des Grundkörpers durch querverlaufende Bolzen gesichert sein.

Die Dichtwirkung vom Verbinder zum angeschlossenen Rohr wird durch jeweils in der Anschlußfläche angeordnete, konzentrische Rillen noch erheblich gesteigert.

Aufgrund der vielseitigen Bearbeitbarkeit der Blockware bzw. der flexiblen Formenwahl beim Spritzguß muß die Anschlußfläche des Blockverbinders keineswegs eben sein, sondern kann auch konische Abschnitte, beispielsweise für den Anschluß eines konischen Verbinders, umfassen.

Darüber hinaus kann durch Wahl der Neigung von jeweiligen Anschlußflächen relativ zueinander nahezu jeder beliebige Anschlußwinkel zwischen zwei Rohren verwirklicht werden.

Aufgrund der formelastischen sowie formstabilen Eigenschaften bedarf es zur Ausbildung einer fluiddichten Verbindung nicht der Zwischenlage weiterer Dichtmittel oder Dichtungen. Dieser überaus erhebliche Vorteil, beispielsweise im Hinblick auf die verschiedenen Ausdehnungskoeffizienten oder chemischen Eigenschaften, gestattet die Verwendung des Verbinders sowohl für einen weiten Temperaturbereich als auch für vielfältige und unterschiedliche Einsatzzwecke. Diese liegen neben der sanitär, Haus-, Fahrzeug- und Flugzeuginstallation im Bereich der chemischen sowie Lebensmittelindustrie, der Pneumatik und generell auf dem Gebiet des Fluidtransportes.

Insbesondere auf dem eben erwähnten Gebiet des Fluidtransportes bietet es sich an einen zusätzlichen separaten Durchgangskanal beabstandet zur Durchgangsbohrung in den Grundkörper einzubringen, um auf einfache Weise einen einstückigen Verbinder für ein Rohr-in-Rohr-System zu realisieren, welcher zwei voneinander getrennte Systeme bereitstellt, wenn beispielsweise aus Sicherheitsgründen ein Medium-führendes Innenrohr innerhalb eines Außenrohrs verlegt werden soll.

Je nach Rohr- und Flanschtyp werden sowohl das Innenals auch das Außenrohr direkt am entsprechend formbearbeiteten Verbinder befestigt. Alternativ kann der einstückige Verbinder aber auch bei einem mehrstückigen Verbinder verwendet werden.

Vorteilhafterweise werden je nach Vewendungsgebiet das Adapterstück und/oder der Grundkörper so ausgebildet, daß ein mehrstückiger Verbinder bereitgestellt wird, bei dem der Anschlußflansch des Innenrohrs zwischen dem Adapterstück und dem Grundverbinder derart angeordnet ist, daß allein durch eine Befestigung des Außenrohrs ohne zusätzliche Befestigungsmittel für das Innenrohr die fluiddichte Verbindung zwischen Innenrohr und Verbinder gewährleistet wird, wobei durch Einbringen von Durchgangskanälen in das Adapterstück sichergestellt wird, daß das Außenrohrsystem nicht unterbrochen ist.

Durch eine geeignete Formbearbeitung des Adapterstücks, beispielsweise durch Einbringen einer Nut, kann das Adapterstück zur hermetischen Abdichtung des Außenrohrsystems zur Umwelt hin je nach Bedarf mit zusätzlichen Dichtungen oder Dichtmittel versehen werden.

Zur Überwachung des gesamten Rohrsystems kann darüber hinaus in einen beliebigen in das Rohrsystem integrierten Grundkörper durch eine bis in einen Durchgangskanal reichende Bohrung ein druckempfindlicher Sensor eingelassen werden, so daß ein möglicher Druckanstieg oder -abfall innerhalb des Außenrohrsystems infolge einer undichten Stelle des Innenrohr- bzw. des Außenrohrsystems sofort erkannt wird.

Die Erfindung wird nachfolgend anhand der beigefügten Zeichnungen unter Bezugnahme auf bevorzugte Ausführungsbeispiele detaillierter beschrieben.
Es zeigen:
- Fig. 1: eine Seitenansicht einer ersten Ausführungsform des erfindungsgemäßen Verbinders aus der Richtung eines angeschlossenen Rohres,
- Fig. 2: eine Querschnittsdarstellung der ersten Ausführungsform des erfindungsgemäßen Verbinders in der Ebene der Längsachse seiner Durchgangsbohrung,
- Fig. 3: eine Querschnittsdarstellung durch einen zweiten Verbinder in etwa in der Ebene der Mittenachsen der Durchgangsbohrungen,
- Fig. 4: eine schematische Querschnittsdarstellung durch eine erste Ausführungsform des erfindungsgemäßen mehrstückigen Verbinders zur Verbindung eines Rohr-in-Rohr Systems,
- Fig. 5: eine Querschnittsdarstellung durch eine zweite Ausführungsform des erfindungsgemäßen mehrstückigen Verbinders zur geradlinigen Verbindung von Rohren am Beispiel eines Rohr-in-Rohr-Systems.

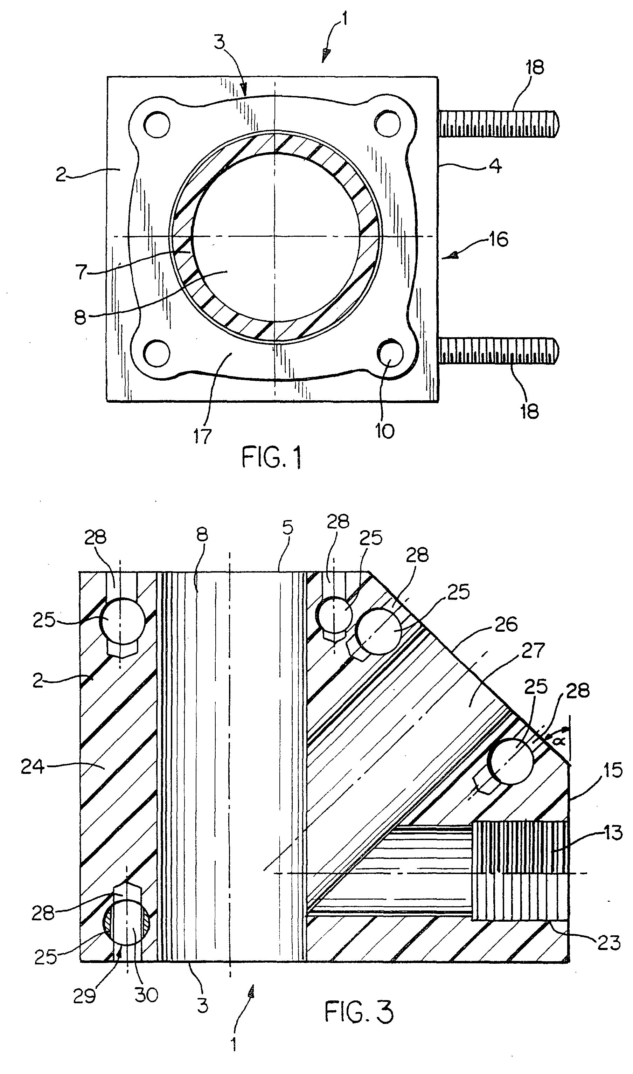

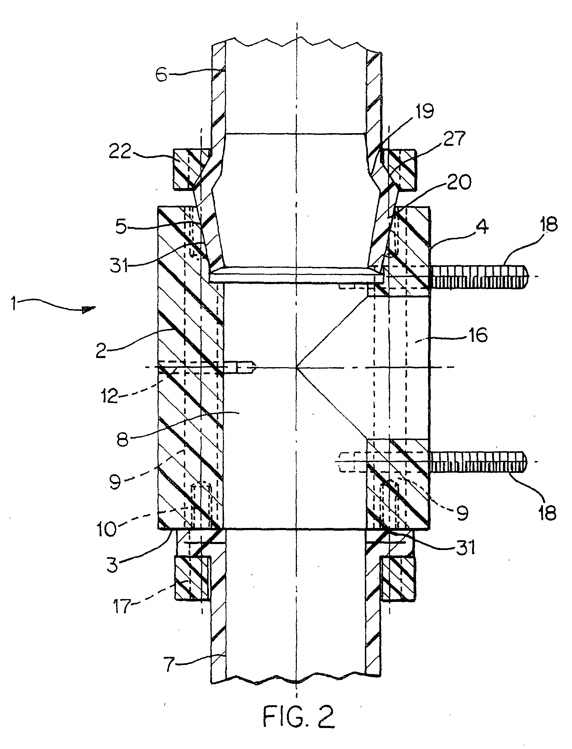

Nachfolgend wird unter Bezugnahme auf das erste, in den Fig. 1 und 2 dargestellte, erfindungsgemäße Ausführungsbeispiel der im ganzen mit 1 bezeichnete Verbinder beschrieben.

Der Verbinder 1 umfaßt einen aus vernetztem Kunststoff bestehenden, blockförmigen Grundkörper 2. Der vernetzte Kunststoff kann vernetztes Polyethylen (PE), vernetztes Polyacetal, vernetztes Phenolharz oder auch SMC 0300 umfassen oder aus diesem bestehen. Desweiteren kann statt den vorgenannten Kunststoffen eine beliebige andere Kunststoffsorte (auch faserverstärkte Kunststoffe) oder Mischungen von Kunststoffsorten mit ähnlichen Festigkeitseigenschaften Verwendung finden.

Der Grundkörper 2 besteht aus Blockmaterial, d.h. Vollmaterial, das mit im wesentlichen ebenen Seitenwänden gefertigt ist. Dieses Blockmaterial wird entweder durch formbearbeitende Maßnahmen, wie beispielsweise Bohren, Fräsen, Sägen, Schneiden, Schleifen oder dergleichen, in seine nachfolgend im einzelnen beschriebene Form gebracht.

Alternativ wird der Grundkörper 2 durch Spritzgießen in seine endgültige Form gebracht. Hierbei kann entweder eine nachträgliche Strahlenvernetzung stattfinden oder durch chemische Beigaben im Kunststoff eine chemische Vernetzung eingeleitet werden.

Bevorzugte Vernetzungsgrade sind hierbei mindestens 60 %.

Durch den Grundkörper 2 erstreckt sich eine Durchgangsbohrung 8, die jeweils in äußere Anschlußflächen 3, 5 für das Anflanschen oder Anschließen von Rohren 6, 7 mündet. Senkrecht zur Durchgangsbohrung 8 mündet in diese, wie aus Fig. 2 zu ersehen, eine Durchgangsbohrung 16 von der Anschlußfläche 4 ausgehend und vervollständigt somit die Fluidführung für einen T-förmigen Verbinder 1.

Ohne Beschränkung der Allgemeinheit sind am Verbinder 1 in der in den Fig. 1 und 2 dargestellten Ausführungsform nur einige von einer Vielzahl von Flanschmöglichkeiten dargestellt.

Das Rohr 7 ist beispielsweise mittels eines Flanschrings 17, der dessen seitlich erweiterten Flanschbereich von hinten übergreift, mit der Anschlußfläche 31 an die Anschlußfläche 3 des Grundkörpers 2 ohne Zwischenlage von irgendwelchen Dichtmitteln oder Dichtungen gepreßt. Hierbei umgreift der Flanschring 17 das Rohr 7 mit nur geringem seitlichem Spiel, um bei hohen Drücken auftretende elastische Formänderungen des Rohrs 7 stets sicher auszuschließen. Der seitlich erweitere Flanschbereich des Rohrs 7 ist vorzugsweise mit dem in der DE-OS 44 23 372.3 oder der EP 95 110 340.7 dargestellten Verfahren hergestellt.

Die Anschlußflächen 3 und 4 sind mit konzentrisch zur Durchgangsbohrung 8, 16 verlaufenden Rillen ausgestattet, die sich beim Anschließen von Rohrstücken dichtend in die Anschlußfläche 31 des jeweiligen Rohres beispielsweise des Rohrs 7 pressen. Hierdurch wird ein fluiddichter Sitz weiter unterstützt.

Der Flanschring 17 wird mit Schrauben (nicht dargestellt), die in Innengewinde von Zugstäben 9 eingeschraubt werden, am Grundkörper 2 gehalten. Die Zugstäbe 9 sind mit quer zu diesen verlaufenden und diese vorzugsweise unter 90 durchtretenden Stiften 12 gegen axiales Verrutschen im Grundkörper 2 gesichert. Die Stifte 12 sitzen hierbei vorzugsweise formschlüssig eingepreßt in Sacklochbohrungen des Grundkörpers 2.

Alternativ können Flanschringe 17 mittels Gewindebolzen 18 und entsprechenden Muttern, beispielsweise an der Anschlußfläche 4, gehalten sein.

Es liegt darüber hinaus im Rahmen der Erfindung, statt der Zugstäbe 9 Stehbolzen mit Außengewinden oder andere geeignete Ankerelemente einzusetzen. Ein derartiger Stehbolzen 9 kann, wie in Fig. 2 auf deren rechten Seite dargestellt, beim Anziehen eines weiteren Losflansches Spannungen im Grundkörper 2 aufnehmen.

Der Anschlußfläche 3 gegenüberliegend und am anderen Ende der Durchgangsbohrung 8 ist das Rohr 6 mittels eines Innenkonus 19 fluiddicht am Grundkörper 2 gehalten. Die Anschlußfläche 5 weist hierbei einen konischen Flächenabschnitt 20 auf, welcher an der Außenseite des durch den Innenkonus 19 schräg nach außen gewölbten Rohres 6 anliegt. An der hinteren, ebenfalls konischen, sich nach oben verjüngenden Flanke des Rohrs 6 liegt kraftbeaufschlagt der Flanschring 22 mit seiner konischen Innenfläche 21 an. Durch den Innenkonus 19, den konischen Anschlußflächenabschnitt 20 sowie den Flanschring 22 mit seiner konischen Innenfläche 21 wird ein Verbinder bereitgestellt, der im wesentlichen vom Prinzip des in der Gebrauchsmusteranmeldung G 89 11 166.4 beschriebenen Verbinders Gebrauch macht, wobei die Offenbarung dieses Schutzrechtes vollumfänglich auch zum Gegenstand der vorliegenden Anmeldung bzw. des sich daraus ergebenden Schutzrechtes gemacht wird.

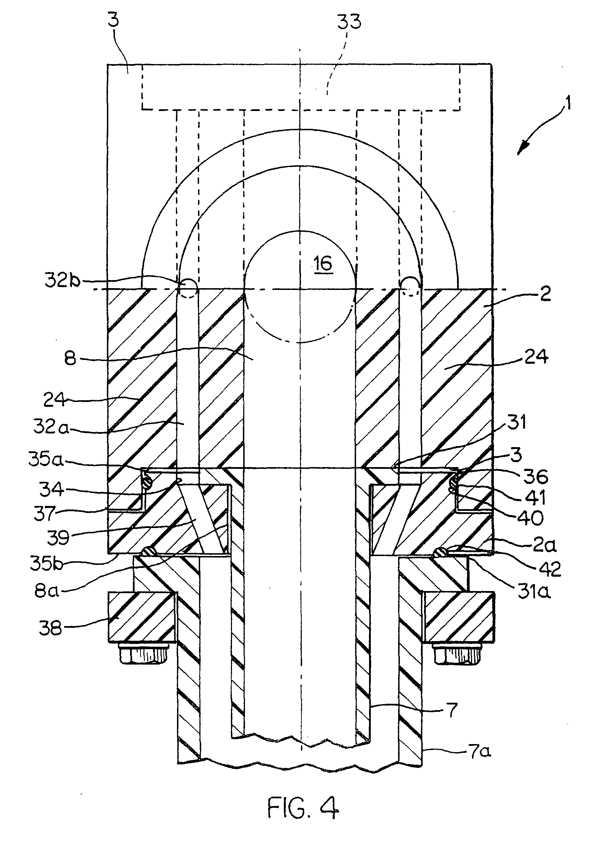

Weitere Befestigungsmöglichkeiten sind an dem Blockverbinder 1 in Fig. 3 gezeigt.

Bei geringen Drücken und kleinen Durchmessern kann beispielsweise bereits ein einfaches Innengewinde 23 zum Anschluß eines mit Außengewinde versehenen Rohres oder entsprechenden Rohradapterstückes an der Anschlußfläche 15 dienen.

Darüber hinaus ist es möglich, beispielsweise im Bereich 24 der Wand des Grundkörpers 2 oder in anderen Wandbereichen selbst nach Montage oder während der Montage vor Ort weitere Durchgangsbohrungen zum Anschließen von Zu- oder Abführungen vorzusehen.

Eine nochmals alternative Befestigungsform für die Ankerelemente 9 ist im linken Bereich des Verbinders 1 oberhalb der Anschlußfläche 3 dargestellt.

Parallel zur Anschlußfläche 3, 5, 26 verlaufen Sackloch- oder Durchgangsbohrungen 25 neben den fluidführenden Durchgangsbohrungen 8, 27 im wesentlichen senkrecht zu diesen Durchgangsbohrungen. In Normalenrichtung von der Anschlußfläche 3, 5, 26 aus erstrecken sich zugehörige Sacklochbohrungen 28, vorzugsweise mittig und senkrecht, durch die jeweiligen Bohrungen 25. Ein zylindrischer Bolzen 29, der beispielhaft nur in der unteren linken Ecke des Verbinders 1 dargestellt ist, ist jeweils in den Bohrungen 28 so angeordnet, daß dessen mit Innengewinde versehene Durchgangsbohrung 30 koaxial zur Bohrung 28 verläuft und der Bolzen 29 somit innerhalb des Grundkörpers 2 ein Ankerelement 9 für Schrauben oder Stehbolzen bildet.

Desweiteren liegt es im Rahmen der Erfindung, den Verbinder 1 mit beliebig geneigten weiteren Bohrungen 27 zum winkligen Anschluß zusätzlicher Rohre zu versehen. Hierbei ist dann zumindest eine Anschlußfläche 26 unter einem Winkel, der nicht ein Vielfaches von 90 Grad beträgt, zu zumindest einer weiteren Anschlußfläche geneigt.

Aufgrund der mechanischen Ausbildung sowie der Materialwahl für den Grundkörper 2 ist der erfindungsgemäße Verbinder 1 sowohl für pneumatische, luft- und wassertechnische als auch chemische oder lebensmitteltechnische Anwendungen geeignet, bei denen beispielsweise aus sicherheitstechnischen Überlegungen häufig auf Rohr-in-Rohr-Systeme zurückgegriffen wird.

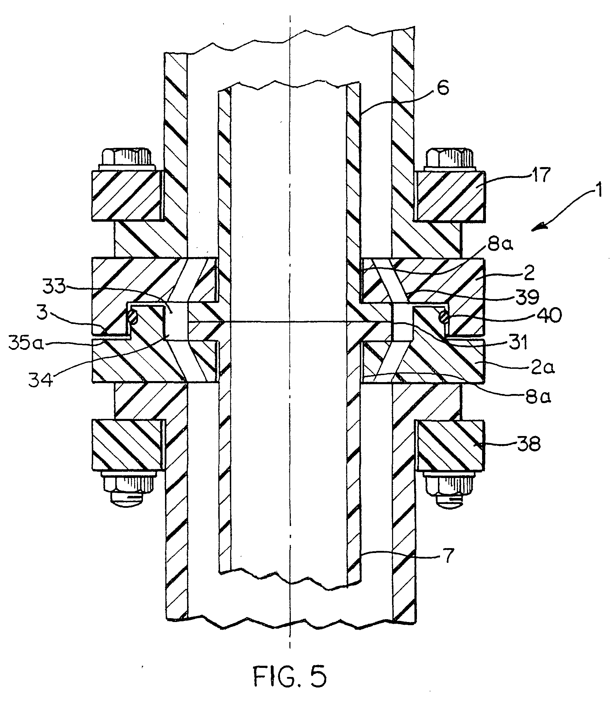

Hierzu empfiehlt es sich, den erfindungsgemäßen Verbinder 1, wie nachfolgend anhand der Fig. 4 und 5 beschrieben wird, als mehrstückigen Verbinder 1 auszubilden. Es sei erwähnt, daß der Einfachheit halber bei den Fig. 4 und 5 keine Befestigungsmittel dargestellt sind, jedoch diesbezüglich alle in Bezug auf die Fig. 1 bis 2 gemachten Ausführungen uneingeschränkt zutreffend sind.

Gemäß Fig. 4 umfaßt der mehrstückige Verbinder 1 den individuell bearbeitbaren blockförmigen Grundkörper 2 und wenigstens einen weiteren ebenfalls individuell bearbeitbaren blockförmigen Grundkörper 2a. Ähnlich wie bei dem T-Verbinder der Fig. 2 weist der Grundkörper 2 eine Durchgangsbohrung 8 und eine senkrecht in diese mündende Durchgangsbohrung 16 auf. Außerdem sind im Wandbereich 24 vier Durchgangskanäle 32a, 32b dargestellt, wobei sich zwischen den Anschlußflächen 3 vorzugsweise zwei Durchgangskanäle 32a erstrecken und senkrecht in diese jeweils ein von der dritten Anschlußseite ausgehender Durchgangskanal 32b mündet. Die Anschlußfläche 3 weist im Bereich der Anschlußfläche 31 des Rohrs 7, wie bereits beschrieben, konzentrisch verlaufenden Rillen auf und ist mit einer zylindrischen Aussparung 33 ausgestattet, um den zylindrischen Absatz 36 mit der formbearbeiteten Gegenanschlußfläche 35a des Grundkörpers 2a aufnehmen zu können. Der zylindrische Absatz 36 wird stirnseitig durch die Dichtfläche 35a und seitlich durch deren Außenumfang mit der Nut 40 definiert.

Der Grundkörper 2a ist mit einer Durchgangsbohrung 8a versehen, um das Rohr 7 mit nur geringfügigem seitlichen Spiel zu umgreifen, so daß der Grundkörper 2a in Bezug auf das Rohr 7 die Funktion des Flanschrings 17 übernimmt.

Die Anschlußfläche 35a des Grundkörpers 2a weist hierzu eine kreisförmige Aussparung 34 auf, um den erweiterten seitlichen Flanschbereich des Rohrs 7 von hinten übergreifen zu können, wobei die Tiefe der Aussparung 34 so bemessen ist, daß die Flanschdicke darin übersteht. Der Grundkörper 2a weist am Außenumfang der Dichtfläche 35 die Nut 40 auf, in welcher ein Rundschnur- oder O-Ring 41 angeordnet ist.

Bei der Montage der Rohr-in-Rohr-Verbindung kann zunächst das Rohr 7 im Grundkörper 2a so angeordnet werden, daß dessen Flansch von der Aussparung 34 aufgenommen ist. Dann kann der zylindrische Absatz 36 in der Aussparung 33 angeordnet werden. Hierdurch wird bereits mittels des O-Rings 41 in der Nut 40 eine fluiddichte Verbindung des Außenrohrsystems geschaffen. Unabhängig von der axialen Lage der Grundkörper 2, 2a zueinander dichtet der O-Ring in der Nut 40 und gestattet die freie Wahl des Anpreßdruckes des Flansches des Rohrs 7 an den Grundkörper 2. Dann wird ein Außenrohr 7a von hinten mittels eines Flanschrings 38 an die Anschlußfläche 35b des Grundkörpers 2a gepreßt, wobei das Rohr 7a im Durchmesser größer als das Rohr 7 ist und dieses im Innern aufnimmt. Zusätzlich sind in den Grundkörper 2a zwei Durchgangskanäle 39 eingelassen, die an der Anschlußfläche 35a mit den Durchgangskanälen 32a des Grundkörpers 2 kommunizieren und zwischen dem Rohr 7 und dem Rohr 7a in die Anschlußfläche 35b münden, so daß ein zweites äußeres fluiddichtes Rohrsystem bereitgestellt ist.

Die Anschlußflächen 35a und 35b können zur fluiddichten Abdichtung ebenfalls mit konzentrisch verlaufenden Rillen ausgestattet sein. Alternativ oder zusätzlich kann bei der gewählten Ausführungsform ein weiterer O-Ring 42 in einer in der Anschlußfläche des Außenrohrs ringförmig ausgebildeten Nut angeordnet sein. Desweiteren ist der Einsatz von Dichtmitteln nicht zwingend, da bereits die Einfräsung von Rillen im Blockmaterial hohe dichtende Wirkung auf weist.

Eine weitere Ausführungsform eines mehrstückigen Verbinders zum einfachen Anschließen von Rohren aneinander ist in Fig. 5 dargestellt. Die Grundkörper 2, 2a sind im wesentlichen ähnlich ausgebildet wie die in Bezug auf die Fig. 4 beschrieben Grundkörper. Die Aussparungen 33 und 34 sind jedoch ausreichend tief, um die Flansche zweier miteinander zu verbindender Rohre 6 und 7 in dem freien Raum zwischen den Aussparungen 33 und 34 aufnehmen zu können. Hierzu weisen beide Grundkörper 2, 2a jeweils eine Durchgangsbohrung 8a auf und umgreifen die Rohre 6 und 7, so daß sich deren Anschlußflächen 31 unmittelbar in dichtender Anlage befinden. Über die kraftbeaufschlagten Flanschringe 17, 38 werden die Anschlußflächen 31 der Rohre 6 und 7 mittels der Grundkörper 2, 2a aneinander gepreßt, so daß bei dieser Ausführungsform eine fluiddichte Verbindung zwischen den Flanschen der Rohre 6, 7 sicher gewährleistet wird. Durch den O-Ring 41 wird eine von der axialen Stellung der Grundkörper unabhängige fluiddichte Verbindung des Außenrohrsystems geschaffen.

Das erfindungsgemäße Rohrsystem vermeidet metallische oder aus ungewollten Materialien bestehende Bauteile innerhalb sowohl des Außenrohr- als auch des Innenrohrsystems. Ferner sind sämtliche Befestigungsmittel von außen zugänglich.

Ferner liegt es im Rahmen der Erfindung, in den Grundkörpern Bohrungen vorzusehen, um beispielsweise druckempfindliche oder andere, wie thermische und chemische, Sensoren zur Überwachung des gesamten Rohrsystems einzulassen, die von außen bis in die Durchgangskanäle reichen. So kann ein möglicher Druckanstieg oder -abfall infolge einer undichten Stelle des Innenrohr- bzw. des Außenrohrsystems der Austritt chemischer Substanzen und/oder der thermische Zustand sofort erkannt werden.

Weiterhin können mit den hier beschriebenen Ausführungsformen verschiedener Verbinder außer Rohrverbindungen auch Verbindungen zu Schläuchen oder Meßfühlern von Meßgeräten sowie zu ähnlichen Einrichtungen, wie Armaturen usw., hergestellt werden.

### Bezugszeichenliste

- 1: Verbinder
- 2, 2a: blockförmiger Grundkörper
- 3, 4, 5: Anschlußfläche
- 6, 7, 7a: Rohr
- 8, 8a: Durchgangsbohrung
- 9: Ankerelement
- 10: Befestigungsmittel
- 11: Zugstäbe
- 12: Stift
- 13: mit Innengewinde versehene Durchgangsbohrung
- 14, 15: Anschlußfläche
- 16: Durchgangsbohrung
- 17: Flanschring
- 18: Gewindebolzen
- 19: Innenkonus
- 20: konischer Abschnitt der Anschlußfläche
- 21: konische Innenfläche
- 22: Flanschring
- 23: Innengewinde
- 24: Wandbereich
- 25: Sackloch- oder Durchgangsbohrung
- 26: Anschlußfläche
- 27: Durchgangsbohrung
- 28: Sacklochbohrung
- 29: Bolzen mit
- 30: Durchgangsbohrung und Innengewinde
- 31, 31a: Anschlußfläche der Rohrflansche
- 32a, 32b: Durchgangskanal
- 33, 34: Aussparung
- 35a, 35b: Anschlußfläche
- 36: zylindrischer Absatz
- 37: Überstand
- 38: Flanschring
- 39: Durchgangskanal
- 40: Nut
- 41, 42: O-Ring

## Patentansprüche

1. Verbinder (1) zum Verbinden von Rohren (6, 7) oder dergleichen umfassend
- eine erste Anschlußfläche (3) für das Anflanschen eines ersten Rohres (7),
- wenigstens einen blockförmigen Grundkörper (2) und
- zumindest eine an dem Grundkörper (2) angeordnete Anschlußfläche (4, 5) für das Anflanschen eines zweiten Rohres (6),
bei welchem der Grundkörper (2) des Verbinders (1) aus einem venetzten Kunststoff besteht oder einen vernetzten Kunststoff enthält.

2. Verbinder nach Anspruch 1, **dadurch gekennzeichnet, daß** der vernetzte Kunststoff Polyethylen (PE) oder Polyacetal ist.

3. Verbinder nach Anspruch 1, **dadurch gekennzeichnet, daß** der vernetzte Kunststoff Phenolharz (PF-Harz) oder ungesättigtes Plyesterharz ist.

4. Verbinder nach Anspruch 1, **dadurch gekennzeichnet, daß** der vernetzte Kunststoff SMC ist.

5. Verbinder nach Anspruch 1 bis 4,
**dadurch gekennzeichnet,**
**daß** der Kunststoff ein faserverstärkter Kunststoff ist.

6. Verbinder nach einem der Ansprüche 1 bis 5,
**dadurch gekennzeichnet,**
**daß** der Grundkörper (2) aus Blockmaterial gefertigt ist und nach seiner Formgebung strahlenvernetzt worden ist.

7. Verbinder nach einem der Ansprüche 1 bis 5,
**dadurch gekennzeichnet,**
**daß** der Grundkörper (2) im wesentlichen durch Spritzguß geformt ist und nach der Formgebung strahlenvernetzt worden ist.

8. Verbinder nach einem der Ansprüche 1 bis 5,
**dadurch gekennzeichnet,**
**daß** der Grundkörper (2) im wesentlichen durch Spritzguß geformt und chemisch vernetzt worden ist.

9. Verbinder nach einem der vorstehenden Ansprüche,
**dadurch gekennzeichnet,**
**daß** der Grundkörper (2) wenigstens eine Durchgangsbohrung (8) aufweist, welche beidseitig in eine Anschlußfläche (4, 5) mündet.

10. Verbinder nach einem der vorstehenden Ansprüche,
**dadurch gekennzeichnet,**
**daß** die Durchgangsbohrung (8) verschiedene Durchmesser in der Nähe von verschiedenen Anschlußflächen hat.

11. Verbinder nach einem der vorstehenden Ansprüche,
**dadurch gekennzeichnet,**
**daß** der Grundkörper (2) Ankerelemente (9) für Befestigungsmittel (10) umfaßt.

12. Verbinder nach Anspruch 11,
**dadurch gekennzeichnet,**
**daß** die Ankerelemente (9) Zugstäbe (11) umfassen, welche innerhalb des Grundkörpers (2) in Durchgangsbohrungen beherbergt sind und auf deren gegenüberliegenden Seiten mit jeweils von außen zugängliche Befestigungsmittel (10) versehen sind.

13. Verbinder nach Anspruch 11 oder 12,
**dadurch gekennzeichnet,**
**daß** die Zugstäbe (11) innerhalb des Grundkörpers (2), vorzugsweise mit quer durch die Zugstäbe (11) verlaufenden Stiften (12), gegen Versatz in axialer Richtung gesichert sind.

14. Verbinder nach einem der Ansprüche 9 bis 13,
**dadurch gekennzeichnet,**
**daß** in die mindestens eine Durchgangsbohrung (8) eine mit Innengewinde versehene Bohrung (13) mündet.

15. Verbinder nach einem der vorstehenden Ansprüche,
**dadurch gekennzeichnet,**
**daß** die Anschlußfläche (3, 4, 5) konzentrische Rillen aufweist.

16. Verbinder nach einem der vorstehenden Ansprüche,
**dadurch gekennzeichnet,**
**daß** die Anschlußfläche (5) einen konischen Abschnitt (20) umfaßt.

17. Verbinder nach einem der vorstehenden Ansprüche,
**dadurch gekennzeichnet,**
**daß** zumindest eine der Anschlußflächen (14) relativ zu zumindest einer weiteren Anschlußfläche (15) unter einem Winkel, der nicht ein Vielfaches von 90 Grad beträgt, angeordnet ist.

18. Verbinder nach einem der vorstehenden Ansprüche,
**dadurch gekennzeichnet,**
**daß** zwischen der Anschlußfläche (3) des Grundkörpers (2) und der Anschlußfläche (31) des Rohrs (6, 7) keine Dichtung oder Dichtmittel angeordnet sind.

19. Verbinder nach einem der vorstehenden Ansprüche,
**dadurch gekennzeichnet,**
**daß** der Grundkörper (2) wenigstens einen separaten Durchgangskanal (32a) aufweist, welcher außerhalb der Anschlußfläche (31) des Rohrs (7) und innerhalb einer Anschlußfläche (31a) eines das Rohr (7) umgebenden Außenrohrs (7a) in eine Anschlußfläche (3) mündet.

20. Verbinder nach Anspruch 19,
**dadurch gekennzeichnet,**
**daß** zwischen der Anschlußfläche (31a) und der Anschlußfläche (3) ein als Adapter dienender Grundkörper (2a) angeordnet ist.

21. Verbinder nach Anspruch 20,
**dadurch gekennzeichnet,**
**daß** der Grundkörper (2a) aus im wesentlichen dem gleichen Material wie der Grundkörper (2) besteht.

22. Verbinder nach Anspruch 20 oder 21,
**dadurch gekennzeichnet,**
**daß** der Adapter (2a) und/oder die Anschlußfläche (3) des Grundkörpers (2) so ausgebildet sind, daß die Änschlußfläche (31) des Rohrs (7) unmittelbar zwischen einer Anschlußfläche (35a) des Adapters (2a) und der Anschlußfläche (3) angeordnet ist, wobei der Adapter (2a) für jeden Durchgangskanal (32a) des Grundkörpers (2) einen zugeordneten Durchgangskanal (39) aufweist.

23. Verbinder nach einem der Ansprüche 20 bis 22,
**dadurch gekennzeichnet,**
**daß** der Grundkörper (2a) an seinem Außenumfang ein Dichtmittel, insbesondere einen O-Ring, aufweist, um ein hermetisch abgeschlossenes System, bestehend aus den Durchgangskanälen (32a, 39) und dem Hohlraum zwischen dem Rohr (7) und dem Außenrohr (7a), bereitzustellen.

24. Verbinder nach einem der Ansprüche 20 bis 23,
**dadurch gekennzeichnet,**
**daß** in einen Grundkörper (2, 2a) eine Bohrung derart eingearbeitet ist, daß mittels einer darin eingelassenen Meßeinrichtung eine Überwachung des Rohrsystems ermöglicht wird.

25. Verbinder nach einem der vorstehenden Ansprüche,
**dadurch gekennzeichnet,**
**daß** sich die Rohre (6, 7) vollständig durch jeweilige Durchgangsbohrungen (8a) zweier Grundkörper (2, 2a) so erstrecken, daß sich die jeweiligen Anschlußflächen (31) der Rohre (6, 7) unmittelbar in Anlage befinden, wobei diese zwischen der Anschlußfläche (3) des einen Grundkörpers (2) und der Anschlußfläche (35a) des anderen Grundkörpers (35a) angeordnet sind.

## Claims

1. A connector (1) for connecting pipes (6, 7) or the like, comprising
- a first connecting surface (3) for a first pipe (7) to be flanged thereon,
- at least one box-shaped base member (2) and
- at least one connecting surface (5) disposed on the base member (2) for a second pipe (6) to be flanged thereon,
wherein the base member (2) of the connector (1) consists of or contains a cross-linked plastic.

2. A connector according to claim 1, **characterised in that** the cross-linked plastic is polyethylene (PE) or polyacetal.

3. A connector according to claim 1, **characterised in that** the cross-linked plastic is phenolic resin (PF resin) or unsaturated polyester resin.

4. A connector according to claim 1, **characterised in that** the cross-linked plastic is SMC.

5. A connector according to claims 1 to 4, **characterised in that** the plastic is a fibre-reinforced plastic.

6. A connector according to any one of claims 1 to 5, **characterised in that** the base member (2) is made from block material and after shaping has been subjected to radiation cross-linking.

7. A connector according to any one of claims 1 to 5, **characterised in that** the base member (2) is shaped mainly by injection moulding and has been radiation cross-linked after shaping.

8. A connector according to any one of claims 1 to 5, **characterised in that** the base member (2) is shaped mainly by injection moulding and has been chemically cross-linked.

9. A connector according to any one of the preceding claims, **characterised in that** the base member (2) has at least one passage bore (8) which on both sides leads into a connecting surface (4, 5).

10. A connector according to any one of the preceding claims, **characterised in that** the passage bore (8) has different diameters near different connecting surfaces.

11. A connector according to any one of the preceding claims, **characterised in that** the base member (2) comprises anchor elements (9) for fixing means (10).

12. A connector according to claim 11, **characterised in that** the anchor elements (9) comprise tie rods (11) which are lodged inside the base member (2) in passage bores and are provided at each of their opposite ends with externally accessible fixing means (10).

13. A connector according to claim 11 or 12, **characterised in that** the tie rods (11) are secured against axial offset inside the base member (2), preferably by pins (12) extending transversely through the tie rods (11).

14. A connector according to any one of claims 9 to 11, **characterised in that** an internally screwthreaded bore (13) leads into the at least one passage bore (8).

15. A connector according to any one of the preceding claims, **characterised in that** the connecting surface (3, 4, 5) has concentric grooves.

16. A connector according to any one of the preceding claims, **characterised in that** the connecting surface (5) comprises a conical portion (20).

17. A connector according to any one of the preceding claims, **characterised in that** at least one of the connecting surfaces (14) is disposed relatively to at least one other connecting surface (15) at angle which is not a multiple of 90°.

18. A connector according to any one of the preceding claims, **characterised in that** there is no seal or sealing means disposed between the connecting surface (3) of the base member (2) and the connecting surface (31) of the pipe (6, 7).

19. A connector according to any one of the preceding claims, **characterised in that** the base member (2) has at least one separate passage duct (32a) which leads into a connecting surface (3) outside the connecting surface (31) of the pipe (7) and inside a connecting surface (31a) of an outer pipe (7a) surrounding the pipe (7).

20. A connector according to claim 19, **characterised in that** a base member (2a) serving as an adapter is disposed between the connecting surface (31a) and the connecting surface (3).

21. A connector according to claim 20, **characterised in that** the base member (2a) consists of basically the same material as the base member (2).

22. A connector according to claim 20 or 21, **characterised in that** the adapter (2a) and/or the connecting surface (3) of the base member (2) is/are so constructed that the connecting surface (31) of the pipe (7) is disposed directly between a connecting surface (35a) of the adapter (2a) and the connecting surface (3), the adapter (2a) having an associated passage duct (39) for each passage duct (32a) of the base member (2).

23. A connector according to any one of claims 20 to 22, **characterised in that** the base member (2a) has at its outer periphery a sealing means, particularly an O-ring, to provide a hermetically sealed system, consisting of the passage ducts (32a, 39) and the cavity between the pipe (7) and the outer pipe (7a).

24. A connector according to any one of claims 20 to 23, **characterised in that** a bore is so formed in a base member (2, 2a) that monitoring of the pipe system is rendered possible by means of a measuring device introduced therein.

25. A connector according to any one of the preceding claims, **characterised in that** the pipes (6, 7) extend completely through respective passage bores (8a) in two base members (2, 2a) in such manner that the respective connecting surfaces (31) of the pipes (6, 7) are in direct contact, the pipes being disposed between the connecting surface (3) of one base member (2) and the connecting surface (35a) of the other base member (35a).

## Revendications

1. Raccord (1) destiné au raccordement de tuyaux (6, 7) ou analogues, comprenant :
- une première face de raccordement (3) pour le bridage d'un premier tuyau (7),
- au moins un corps de base (2) en forme de bloc, et
- au moins une face de raccordement (4, 5), située au niveau du corps de base (2) pour le bridage d'un second tuyau (6),
dans lequel le corps de base (2) du raccord (1) consiste en une matière plastique réticulée, ou contient une matière plastique réticulée.

2. Raccord selon la revendication 1, **caractérisé en ce que** la matière plastique réticulée est du polyéthylène (PE) ou du polyacétal.

3. Raccord selon la revendication 1, **caractérisé en ce que** la matière plastique réticulée est de la résine phénolique (résine PF) ou de la résine polyester non saturée.

4. Raccord selon la revendication 1, **caractérisé en ce que** la matière plastique réticulée est du SMC.

5. Raccord selon les revendications 1 à 4, **caractérisé en ce que** la matière plastique est une matière plastique renforcée par fibres.

6. Raccord selon l'une des revendications 1 à 5, **caractérisé en ce que** le corps de base (2) est fabriqué à partir d'un matériau en bloc et **en ce qu'**il a été réticulé par irradiation, après son façonnage.

7. Raccord selon l'une des revendications 1 à 5, **caractérisé en ce que** le corps de base (2) est formé essentiellement par moulage par injection et **en ce qu'**il a été réticulé par irradiation, après le façonnage.

8. Raccord selon l'une des revendications 1 à 5, **caractérisé en ce que** le corps de base (2) est formé essentiellement par moulage par injection et **en ce qu'**il a été réticulé chimiquement.

9. Raccord selon l'une des revendications précédentes, **caractérisé en ce que** le corps de base (2) présente au moins un alésage traversant (8), qui débouche de chaque côté dans une face de raccordement (4, 5).

10. Raccord selon l'une des revendications précédentes, **caractérisé en ce que** l'alésage traversant (8) a des diamètres différents à proximité de faces de raccordement différentes.

11. Raccord selon l'une des revendications précédentes, **caractérisé en ce que** le corps de base (2) comprend des éléments d'ancrage (9) pour des moyens de fixation (10).

12. Raccord selon la revendication 11, **caractérisé en ce que** les éléments d'ancrage (9) comprennent des tirants (11), qui sont logés dans des alésages traversants à l'intérieur du corps de base (2) et qui sont pourvus, sur leurs côtés opposés, chaque fois de moyens de fixation (10) accessibles depuis l'extérieur.

13. Raccord selon la revendication 11 ou 12, **caractérisé en ce que** les tirants (11) sont assurés contre tout décalage dans le sens axial, à l'intérieur du corps de base (2), de préférence par des goupilles (12) qui s'étendent transversalement à travers les tirants (11).

14. Raccord selon l'une des revendications 9 à 13, **caractérisé en ce qu'**un alésage (13) pourvu d'un taraudage débouche dans ledit au moins un alésage traversant (8).

15. Raccord selon l'une des revendications précédentes, **caractérisé en ce que** la face de raccordement (3, 4, 5) présente des rainures concentriques.

16. Raccord selon l'une des revendications précédentes, **caractérisé en ce que** la face de raccordement (5) présente une partie conique (20).

17. Raccord selon l'une des revendications précédentes, **caractérisé en ce qu'**au moins l'une des faces de raccordement (14) est disposée, par rapport à au moins une autre face de raccordement (15), en formant un angle qui n'est pas un multiple de 90 degrés.

18. Raccord selon l'une des revendications précédentes, **caractérisé en ce qu'**il n'est prévu, entre la face de raccordement (3) du corps de base (2) et la face de raccordement (31) du tuyau (6, 7), ni garniture d'étanchéité ni moyens d'étanchéité.

19. Raccord selon l'une des revendications précédentes, **caractérisé en ce que** le corps de base (2) présente au moins un passage traversant (32a) séparé, qui débouche dans une face de raccordement (3), à l'extérieur par rapport à la face de raccordement (31) du tuyau (7) et à l'intérieur par rapport à une face de raccordement (31a) d'un tuyau extérieur (7a) entourant le tuyau (7).

20. Raccord selon la revendication 19, **caractérisé en ce qu'**il est prévu, entre la face de raccordement (31a) et la face de raccordement (3), un corps de base (2a) servant d'adaptateur.

21. Raccord selon la revendication 20, **caractérisé en ce que** le corps de base (2a) consiste sensiblement en la même matière que le corps de base (2).

22. Raccord selon la revendication 20 ou 21, **caractérisé en ce que** l'adaptateur (2a) et/ou la face de raccordement (3) du corps de base (2) est/sont conformé(s) de telle manière que la face de raccordement (31) du tuyau (7) soit disposée directement entre une face de raccordement (35a) de l'adaptateur (2a) et la face de raccordement (3), si bien que l'adaptateur (2a) présente un passage traversant (39) associé à chaque passage traversant (32a) du corps de base (2).

23. Raccord selon l'une des revendications 20 à 22, **caractérisé en ce que** le corps de base (2a) présente, au niveau de sa périphérie extérieure, un moyen d'étanchéité, notamment un joint torique, afin de constituer un système hermétiquement fermé, qui se compose des passages traversants (32a, 39) et de l'espace vide entre le tuyau (7) et le tuyau extérieur (7a).

24. Raccord selon l'une des revendications 20 à 23, **caractérisé en ce qu'**un trou est pratiqué dans un corps de base (2, 2a) de telle manière que le système de tuyaux puisse être surveillé à l'aide d'un dispositif de mesure introduit dans ce trou.

25. Raccord selon l'une des revendications précédentes, **caractérisé en ce que** les tuyaux (6, 7) s'étendent complètement dans des alésages traversants (8a) correspondants de deux corps de base (2, 2a) de telle manière que les faces de raccordement (31) respectives des tuyaux (6, 7) se trouvent directement en contact l'une avec l'autre, en étant situées entre la face de raccordement (3) d'un corps de base (2) et la face de raccordement (35a) de l'autre corps de base (2a).
